Europäisches Patentamt

(19) European Patent Office

Office européen des brevets

(11) Publication number : **0 496 500 A2**

(12) **EUROPEAN PATENT APPLICATION**

(21) Application number : **92300174.7**

(22) Date of filing : **09.01.92**

(51) Int. Cl.⁵ : **F16K 31/06**

(30) Priority : **16.01.91 US 641769**

(43) Date of publication of application :
**29.07.92 Bulletin 92/31**

(84) Designated Contracting States :
**AT BE CH DE DK ES FR GB GR IT LI LU NL PT SE**

(71) Applicant : **Chi, Cheng-Hsian**
**187 Tung An Road**
**Ta Chia, Tai Chung (TW)**

(72) Inventor : **Chi, Cheng-Hsian**
**187 Tung An Road**
**Ta Chia, Tai Chung (TW)**

(74) Representative : **Jones, Stephen Anthony et al**
**E. N. Lewis & Taylor 144 New Walk**
**Leicester LE1 7JA (GB)**

(54) **Faucet.**

(57) A faucet for automatic water supply and stoppage comprises a casing (1) containing a two-way electromagnetic valve (3) controlled by an infrared controller (2) to control a water flow control assembly (4) to stop or open a water outlet passage (11).

The water flow control assembly (4) comprises a movable stopper (41) to releasably block the water outlet passage (11), an elastic element (42) disposed above the movable stopper (41) and a cover plate (43), the elastic member (42) and the cover plate (43) defining a water chamber (44). The cover plate (43) has an outlet hole (431) at the top, which can be opened or closed by the mandrel (35) of the electromagnetic valve (3) and is in communication with the water outlet passage (11), and an inlet hole (432) which is in communication with the water chamber (44). The movable stopper (41) defines therein a channel (411) having one end in communication with the water inlet passage (12) and an opposite end in communication with said water chamber (44) through a through-hole (412) smaller in size than the inlet hole (432) of the cover plate (43). The infrared controller (2) is sensed to trigger the electromagnetic valve (3) to lift the mandrel (35) from the outlet hole (431), permitting the movable stopper (41) to be pushed toward the water chamber (44) by intake water pressure so as to fully open the water outlet passage (12).

FIG. 2

This invention relates to a faucet or tap for automatic water supply and stoppage.

In US Patent No 4,826,129 there is disclosed a faucet for automatic water supply and stoppage, in which a controller actuates a two-way electromagnetic valve to lift a mandrel, thereby permitting the water to flow out when the user's hands are close to the front of the faucet. The valve is capable of automatic locking and can be actuated only by an instantaneous trigger of electric energy so as to save power, and for safety and convenience. However, the instantaneous pressure change and the suction effect resulting from rapid water flow tend to displace the mandrel downward, causing the outlet passage to be incompletely opened. As a consequence, the desired maximum water flow rate cannot be achieved. If the capacity of the electromagnetic valve is increased, power consumption is increased correspondingly.

The present invention overcomes or substantially mitigates the aforesaid problems.

According to the invention, there is provided a faucet for automatic water supply and stoppage, comprising:

a casing having disposed therein infrared control means to sense the presence and removal of a user from the proximity of the front of the faucet, a water inlet passage and a water outlet passage;

electromagnetic valve means including a mandrel controlled by said infrared control means to move up and down;

a water flow control assembly disposed in said casing above said water inlet and outlet passages, controlled to open or close said water outlet passage by said two-way electromagnetic valve means;

characterised in that said water flow control assembly comprises a movable stopper to releasably block said water outlet passage, an elastic element disposed above said movable stopper, a cover plate above the elastic member, a water chamber defined between the stopper and the cover plate around the elastic member, said cover plate having an outlet hole which can be opened or closed from above by said mandrel and which is in communication with said water outlet passage, said mandrel being located to operate in a space above the cover plate, passage means providing water flow communication between said water chamber and said space, said movable stopper defining therein a channel in direct communication with said water inlet passage and in communication with said water chamber through a through-hole smaller in size than said passage means;

whereby, in use, the presence of a user in the proximity of the front of the faucet is sensed by said infrared control means to cause said electromagnetic valve means to lift said mandrel from said outlet hole, and to permit said movable stopper to be pushed toward said water chamber by intake water pressure, due to reduced pressure in said chamber caused by the size difference between said through hole and said passage means, so as to fully open said water outlet passage.

The faucet according to the invention is advantageous in that maximum water flow rate is permitted from the faucet through the water outlet passage without additional power consumption.

The invention will now be described in more detail, by way of illustration only, with reference to the accompanying drawings, in which

Figure 1 is a perspective dismantled view of a preferred embodiment of the present invention;

Figure 2 is a sectional assembly view of the embodiment of Figure 1;

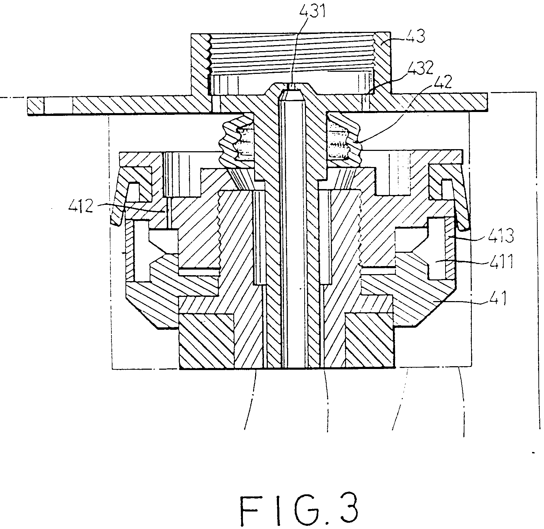

Figure 3 is a sectional view of the water flow control assembly forming part of the embodiment of Figures 1 and 2;

Figure 4 is a schematic sectional view, illustrating the operation of the embodiment of Figures 1 to 3;

Figure 5 illustrates a second embodiment of the present invention.

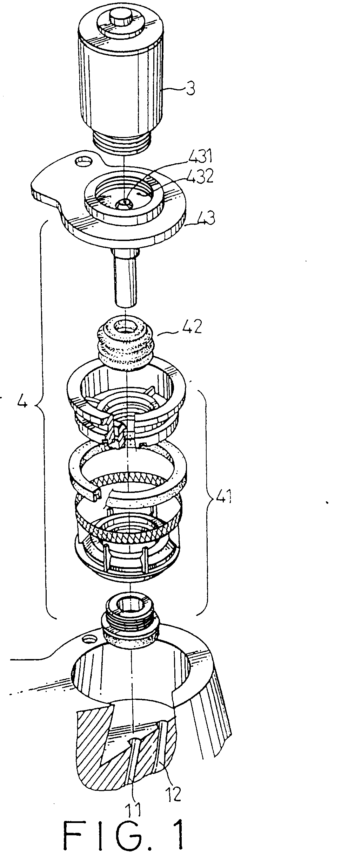

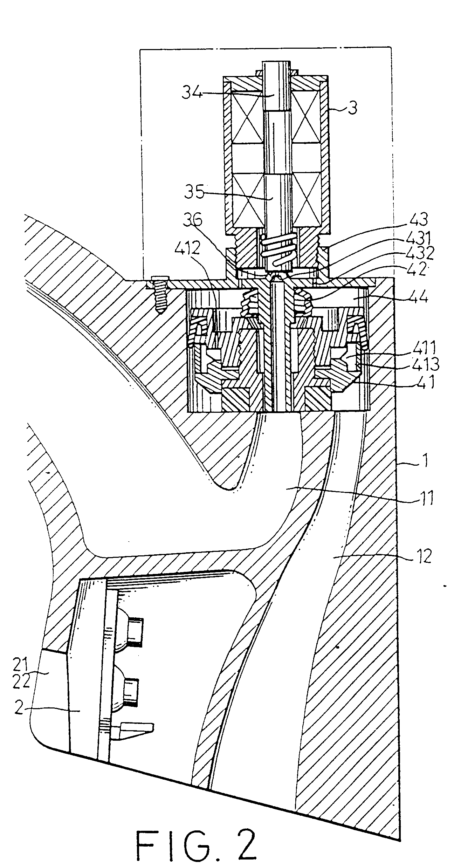

Referring first to Figures 1 and 2, a faucet according to the present invention generally comprises a casing 1, a controller 2, a battery operated two-way electromagnetic valve 3, and a water flow control assembly 4.

The controller 2 is disposed at the inner bottom of the casing 1, and comprises an infrared transmitter 21 and infrared receiver 22 located toward the front to sense the presence and removal of a user from the proximity of the front of the casing 1 so as to trigger the two-way electromagnetic valve 3.

An outlet passage 11 and an inlet passage 12 are disposed in the casing 1. The water flow control assembly 4 is disposed in the casing 1 above the outlet passage 11, and comprises a movable stopper 41 at the bottom for blocking up the outlet passage 11, a cover plate 43 at the top, and an elastic element 42 fitted therebetween. A water chamber 44 is defined inside the water flow control assembly 4 between the movable stopper 41 and the cover plate 43. The cover plate 43 of the water flow control assembly 4 has an outlet hole 431 on the top centre in communication with the outlet passage 11, and an inlet hole 432 on the top forming passage means providing communication between the water chamber 44 and a space above the cover plate containing the valve.

The movable stopper 41 defines therein a channel 411 in communication with the inlet passage 12 and covered with a wire gauze filter 413. A through-hole 412 smaller in size than the inlet hole 432 is provided in the movable stopper at a suitable location and disposed in communication with the water chamber 44. The battery-operated two-way electromagnetic valve 3 is installed in the casing 1 above the water flow control assembly 4, for controlling a closure block 36 to stop the outlet hole 431 of the water flow control assembly 4 via a mandrel 35.

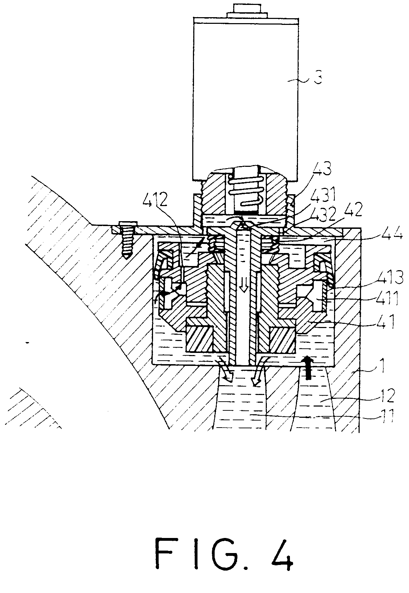

The operation of the present invention will now be outlined with reference to Figure 4. The user may put his or her hands in front of the controller 2 below the outlet passage 11, so as to cause the two-way electromagnetic valve 3 to operate, causing the mandrel 35 to be attracted by a permanent magnet 34. The outlet hole 431 of the water flow control assembly 4 is thereby opened enabling water to flow therethrough into the outlet passage 11. Because the flow rate from the outlet hole 431 into the outlet passage 11 is low, power consumption of the two-way electromagnetic valve is also low. At the same time, the water which come from the inlet passage 12 through the channel 411 of the movable stopper 41 into the water chamber 44 is continuously supplied from the water chamber 44 through the inlet hole 432. Because the water flow rate through the inlet hole 432 is higher than the water flow rate through the through-hole 412, the amount of water in the water chamber 44 is suddenly reduced and the pressure inside the water chamber 44 is also reduced. Therefore, the movable stopper 41 is forced by the intake water pressure to lift, permitting the outlet passage 11 to be fully opened. Maximum water flow is thus permitted to discharge through the outlet passage without additional power consumption.

After washing, the user moves his or her hands away from the front of the infrared transmitter 21 and infrared receiver 22 of the controller 2, and the mandrel 35 of the two-way electromagnetic valve 3 is forced by reversed magnetic force to move down, causing the closure block 36 to block up the outlet hole 431 of the water flow control assembly 4. Because water is continuously flowing into the water chamber 44, the pressure inside the water chamber 44 is gradually returned to normal, permitting the elastic element 42 to force the movable stopper 41 to seal the outlet passage 11. The water supply is thereby stopped from flowing out of the faucet.

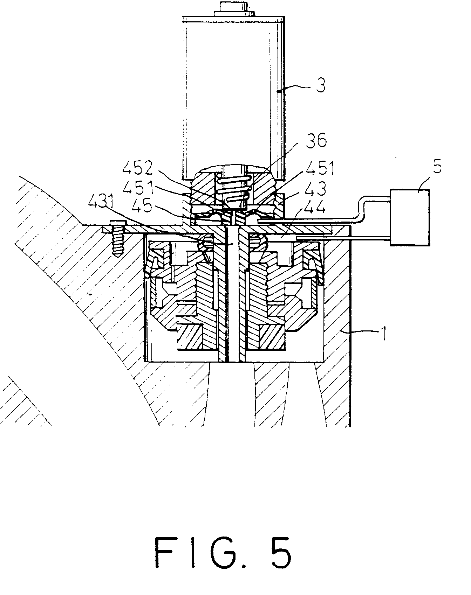

Referring to Figure 5, in an alternative form of the present invention, no inlet hole 432 is provided on the top of the cover plate 43, but in the space between the two-way electromagnetic valve 3 and the cover plate 43 there is installed a rubber valve 45 to separate said space into upper and lower chambers. Two first inlet holes 451 are disposed in the periphery of the rubber valve 45 so as to enable said chambers to communicate with each other. A second inlet hole 452 larger in size than the first inlet hole 451 is disposed in the centre of the rubber valve 45 and is blocked by the closure block 36 of the two-way electromagnetic valve 3. A closed outlet hole 431 is disposed in the bottom of the rubber valve 45. The chamber below the rubber valve 45 communicates with the water chamber 44 through a pressure reducing valve 5 defining the passage means in this embodiment. When the two-way electromagnetic valve 3 is actuated to cause the closure block 36 to lift, the rubber valve 45 will be moved upward permitting the closed outlet hole 431 to be opened. Through the operation of the pressure reducing valve 5, the pressure inside the water chamber 44 can be more accurately regulated.

## Claims

1. A faucet for automatic water supply and stoppage, comprising:

    a casing (1) having disposed therein infrared control means (2) to sense the presence and removal of a user from the proximity of the front of the faucet, a water inlet passage (12) and a water outlet passage (11);

    electromagnetic valve means (3) including a mandrel (35) controlled by said infrared control means (2) to move up and down;

    a water flow control assembly (4) disposed in said casing (1) above said water inlet (12) and outlet (11) passages, controlled to open or close said water outlet passage (11) by said two-way electromagnetic valve means (3);

    characterised in that said water flow control assembly (4) comprises a movable stopper (41) to releasably block said water outlet passage (11), an elastic element (42) disposed above said movable stopper (41), a cover plate (43) above the elastic member (42), a water chamber (44) defined between the stopper (41) and the cover plate (43) around the elastic member (42), said cover plate (43) having an outlet hole (431) which can be opened or closed from above by said mandrel (35) and which is in communication with said water outlet passage (11), said mandrel (35) being located to operate in a space above the cover plate, passage means (432) providing water flow communication between said water chamber (44) and said space, said movable stopper (41) defining therein a channel (411) in direct communication with said water inlet passage (12) and in communication with said water chamber (44) through a through-hole (412) smaller in size than said passage means (432);

    whereby, in use, the presence of a user in the proximity of the front of the faucet is sensed by said infrared control means (2) to cause said electromagnetic valve means (3) to lift said mandrel (35) from said outlet hole (431), and to permit said movable stopper (41) to be pushed toward said water chamber (44) by intake water pressure, due to reduced pressure in said chamber caused by the size difference between said through hole (412) and said passage means (432), so as to fully open said water outlet passage (11).

2. A faucet as claimed in claim 1, wherein said channel (411) of said movable stopper (41) is covered with a wire gauze filter (413).

3. A faucet as claimed in claim 1 or claim 2 further comprising a rubber valve (45) disposed in the space between the electromagnetic valve (3) and cover plate (43) to separate said space into upper and lower chambers, a first inlet hole (451) disposed in the periphery of said rubber valve (45) so as to enable said chambers to communicate with each other, an outlet hole (452) disposed in the centre of said rubber valve (45), which is blocked by a closure block (36) of said two-way electromagnetic valve (3), a closed outlet passage disposed in the bottom of said rubber valve, and wherein said passage means includes a pressure reducing valve (5) connected between said water chamber (44) and said lower chamber for automatically regulating the water pressure.

4. A faucet as claimed in claim 1 or claim 2, wherein the passage means comprises an inlet hole (432) in the cover plate (43).

FIG. 1

FIG. 2

FIG.3

# FIG. 4

FIG. 5